(19) Europäisches Patentamt
European Patent Office
Office européen des brevets

(11) **EP 1 225 112 B1**

(12) **FASCICULE DE BREVET EUROPEEN**

(45) Date de publication et mention
de la délivrance du brevet:
**30.12.2009 Bulletin 2009/53**

(51) Int Cl.:
***B60T 13/575*** (2006.01)

(21) Numéro de dépôt: **02290134.2**

(22) Date de dépôt: **18.01.2002**

(54) **Amplificateur de force de freinage à double rapport d'amplification pour véhicules automobiles**

Bremskraftverstärker mit zwei Verstärkungsverhältnissen für Kraftfahrzeuge

Brake booster with a double booster ratio for motor vehicles

(84) Etats contractants désignés:
**DE FR GB**

(30) Priorité: **22.01.2001 FR 0100822**

(43) Date de publication de la demande:
**24.07.2002 Bulletin 2002/30**

(73) Titulaire: **Delphi Technologies, Inc.
Troy, MI 48098 (US)**

(72) Inventeur: **Castel, Philippe
75005 Paris (FR)**

(74) Mandataire: **Habasque, Etienne J. Jean-François
Cabinet Lavoix
2, place d'Estienne d'Orves
75441 Paris Cedex 09 (FR)**

(56) Documents cités:
**US-A- 5 425 302    US-A- 5 683 147
US-A- 5 884 548    US-A- 5 943 937**

- **PATENT ABSTRACTS OF JAPAN vol. 1998, no. 14, 31 décembre 1998 (1998-12-31) & JP 10 230841 A (NABCO LTD), 2 septembre 1998 (1998-09-02)**
- **PATENT ABSTRACTS OF JAPAN vol. 1999, no. 13, 30 novembre 1999 (1999-11-30) & JP 11 208456 A (NABCO LTD), 3 août 1999 (1999-08-03)**

**EP 1 225 112 B1**

**Description**

La présente invention concerne des systèmes de freinage pour véhicules routiers et se rapporte plus particulièrement à un amplificateur de force de freinage à double rapport d'amplification.

Les systèmes de freinage à double rapport d'amplification comportent généralement un maître cylindre destiné, lors de l'actionnement d'une pédale de frein, à soumettre le fluide de freinage à une pression accrue transmise par l'intermédiaire de conduits appropriés jusqu'aux freins du véhicule de manière à les actionner. Entre le maître cylindre et la pédale de frein est interposé un amplificateur de force de freinage, apte à multiplier la force appliquée par un conducteur sur la pédale de frein par un premier rapport d'amplification tant que cette force ne dépasse pas un certain seuil, puis par un second rapport d'amplification au delà de ce seuil.

La demande de brevet US 5,943,937 décrit un amplificateur de freinage qui est commandé de manière purement manuelle.

Un amplificateur de force de freinage comporte de manière connue une enceinte, une membrane séparant l'enceinte en une chambre avant qui est équipée de moyens de raccordement à une source de dépression et en une chambre arrière.

L'amplificateur de force de freinage comporte également de façon classique un ensemble mobile formé d'une part d'un ensemble de poussée destiné à transmettre en sortie la force amplifiée et d'autre part d'un piston destiné à communiquer à l'ensemble de poussée, la force additionnelle générée par une différence de pression entre la chambre avant et la chambre arrière. Le piston comporte un plongeur monté axialement déplaçable à l'intérieur de celui-ci et apte à venir en appui sur un disque de réaction. Ce plongeur transmet la force appliquée sur la pédale de frein à l'ensemble de poussée par l'intermédiaire du disque de réaction.

L'ensemble de poussée se compose principalement d'un manchon, d'un poussoir en appui sur le piston par l'intermédiaire du disque de réaction et monté déplaçable axialement à l'intérieur du manchon. L'ensemble de poussée comporte également un ressort destiné à s'opposer à l'enfoncement du poussoir à l'intérieur du manchon.

Le disque de réaction est interposé entre d'un coté une surface d'appui du poussoir et de l'autre coté des surfaces d'appui respectives du plongeur et du piston.

Sous l'action d'une tige de commande relié à la pédale de frein et recevant la force de freinage ou force d'entrée, le plongeur et le piston exercent conjointement une force de poussée sur le poussoir par l'intermédiaire du disque de réaction. Le poussoir, sous les actions conjuguées de la force de poussée et de la force de rappel du ressort se déplace axialement dans le manchon de l'ensemble de poussée entre un premier état de freinage correspondant à un premier rapport d'amplification de la force d'entrée et un second état de freinage correspondant à un second rapport d'amplification de la force d'entrée.

Dans ces amplificateurs de force de freinage connus, le réglage du seuil de la force d'entrée F0, pour lequel à lieu le passage entre le premier et le second états de freinage est réalisé en choisissant un ressort dont la constante d'élasticité est plus appropriée, ce qui est fastidieux.

La présente invention vise donc à palier ces inconvénients en créant un amplificateur de force de freinage à double rapport d'amplification dans lequel la force pour laquelle a lieu le passage entre le premier et le second états peut être réglée de façon plus simple.

L'invention a donc pour objet un amplificateur de force de freinage à double rapport d'amplification comportant :

- un piston actionné par une pression différentielle entre deux chambres ;
- un plongeur, monté axialement déplaçable dans ce piston entre des positions commandant l'évolution de cette pression différentielle par l'intermédiaire de moyens de commutation, sous la commande d'une pédale de frein ;
- un ensemble de poussée comprenant une tige de réaction reliée au maître cylindre des freins correspondant, et montée axialement déplaçable sous la commande du plongeur entre un premier état de freinage correspondant à un premier rapport d'amplification de la force de freinage, et un second état de freinage correspondant à un second rapport d'amplification de la force de freinage, et un disque de réaction déformable interposé entre le piston et le plongeur d'une part, et la tige de réaction d'autre part,

caractérisé en ce que l'ensemble de poussée comporte des moyens d'absorption des déformations du disque de réaction, lesdites déformations contribuant à déterminer la force de freinage pour laquelle a lieu le passage entre le premier et le second états de freinage.

Suivant d'autres caractéristiques d'un amplificateur de force de freinage à double rapport d'amplification conforme à l'invention :

- lesdites déformations sont fonction de la raideur du disque de réaction.
- il comporte une surface d'appui destinée à venir en contact avec une surface d'appui correspondante de l'ensemble de poussée, l'aire de contact entre ces deux surfaces déterminant sensiblement le second rapport d'amplification, et la distance X entre ces deux surfaces, au repos, contribuant à déterminer la force de freinage pour laquelle a lieu le passage entre le premier et le second états de freinage.
- lesdites surfaces d'appui du piston et de l'ensemble de poussée sont annulaires et coaxiales entre elles.
- le disque de réaction est disposé dans un logement formé dans une tête à l'extrémité de la tige de réaction, ledit logement ménageant une cavité formant lesdits moyens d'absorption des déformations.

- il est adapté pour recevoir une extrémité du piston et présent une dimension supérieure à celle de ladite extrémité du piston de manière à ménager la cavité d'absorption des déformations du disque de réaction

- la tige de réaction comporte à son extrémité une tête montée axialement déplaçable à l'intérieur d'un manchon pourvu d'un rebord formant d'une part un orifice dans lequel une extrémité du piston coulisse, et d'autre part une surface d'appui, le disque de réaction étant logé à l'intérieur du manchon en appui d'un côté sur ladite tête- et d'un autre côté sur ladite surface d'appui du rebord, ladite surface d'appui du rebord coopérant avec ladite extrémité du piston lors du déplacement de celui-ci pour former lesdits moyens d'absorption des déformations du disque de réaction.

- l'orifice formé par le rebord du manchon est circulaire et en ce que l'extrémité du piston apte à coulisser dans celui-ci est cylindrique.

- des moyens élastiques sont montés à l'intérieur du manchon en appui d'une part sur une face de la tête de la tige de réaction opposée au disque de réaction et d'autre part sur une butée solidaire du manchon pour exercer sur ce dernier une force de rappel.

- les moyens élastiques sont formés d'une rondelle Belleville.

- le manchon comporte un épaulement adapté pour servir de butée de fin de course à la tête de la tige de réaction en l'absence de freinage.

- le disque de réaction est pratiquement incompressible.

- le premier rapport d'amplification est-pratiquement constant.

- le second rapport d'amplification est pratiquement constant.

L'invention sera mieux comprise à la lecture de la description qui va suivre, donnée uniquement à titre d'exemple et faite en se référant aux dessins annexés sur lesquels :

- la figure 1 est une vue schématique en coupe longitudinale d'un amplificateur de force de freinage à double rapport d'amplification selon l'art antérieur ;

- la figure 2 est une vue schématique en coupe longitudinale d'un ensemble de poussée d'un amplificateur de force de freinage conforme à l'invention dans un premier état de freinage ;

- la figure 3 est représente l'ensemble de poussée de la figure 2 dans un second état de freinage ;

- la figure 4 est un graphe illustrant la force produite en sortie de l'amplificateur de le figure 2 en fonction de la force appliquée en entrée;

- la figure 5 est une vue analogue à celle de la figure 4 illustrant une variante de réalisation de l'invention ;

- la figure 6 est un graphe illustrant la force produite en sortie de l'amplificateur de la figure 5 en fonction de la force appliquée en entrée ; et

- la figure 7 est une vue analogue à celle de la figure 4 illustrant une autre variante de réalisation de l'invention ;

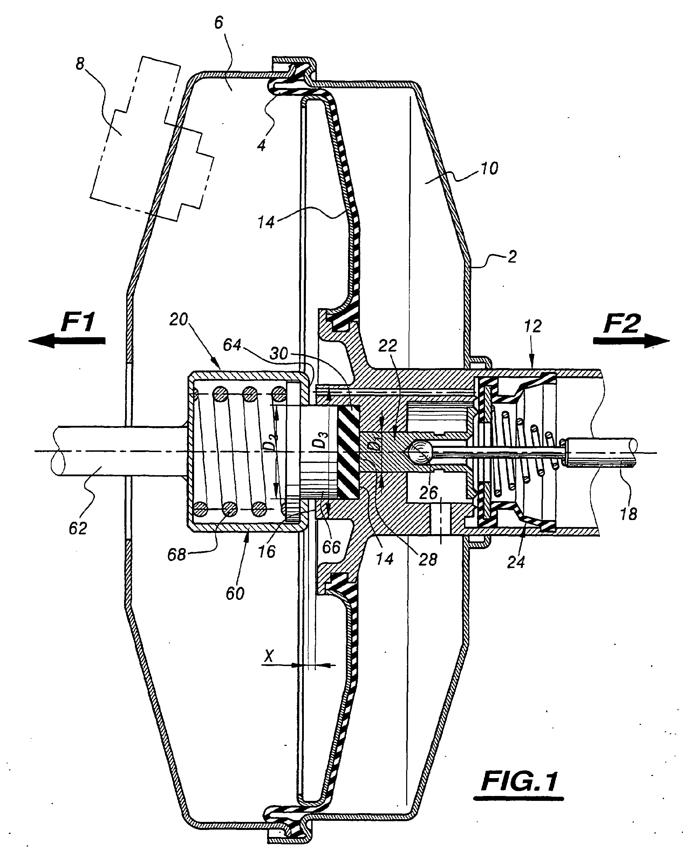

Sur la figure 1 on a représenté schématiquement en coupe longitudinale un amplificateur de force de freinage à double rapport d'amplification selon l'état actuel de la technique.

Il comprend une enceinte close 2 dans laquelle est disposée une membrane 4 délimitant une chambre avant 6 équipée de moyens 8 de raccordement à une source de dépression (non représentée) et une chambre arrière 10 dans laquelle règne une pression variable. La partie centrale de la membrane 4 est montée sur un piston 12 axialement coulissant dans l'enceinte 2 selon une direction sensiblement perpendiculaire au plan général de séparation de cette enceinte 2 par ladite membrane 4. Un support de membrane 14 présentant la forme générale d'une coupelle est fixé rigidement au piston 12 et s'étend radialement à partir de celui-ci. Le piston 12 possède une première et une seconde surfaces d'appui 14 et 16 annulaires et coaxiales tournées vers la chambre avant 6. La première surface d'appui 14, de diamètre $D_2$, est disposée en arrière de la seconde surface d'appui 16, de diamètre $D_3$, dans le sens de la flèche F1, c'est à dire en direction de la chambre avant. L'intérêt de ces surfaces d'appui apparaîtra à la lecture de la suite de la description.

Les deux extrémités du piston 12 reçoivent chacune un organe communiquant l'un la force d'entrée, l'autre celle de sortie, à savoir respectivement un ensemble de commande disposé du côté de la chambre arrière 10 et relié à la pédale de frein par l'intermédiaire d'une tige de commande 18, et un ensemble de poussée 20 disposé du côté de la chambre avant 6 et relié au maître cylindre.

L'ensemble de commande comprend un plongeur 22 monté axialement déplaçable dans le piston 12 entre des positions commandant l'évolution de la différence de pression entre les deux chambres 6 et 10 par l'intermédiaire de moyens de commutation 24 connus. Le plongeur 22 est relié au moyen d'un appui rotulant 26 à la tige de commande 18 qui est ainsi apte à actionner ce plongeur 22. L'extrémité du plongeur 22 opposée à la tige de commande 18, comporte une surface circulaire d'appui 28, de diamètre $D_1$, destinée à s'appliquer sur un disque de réaction 30. La première surface annulaire d'appui 14 du piston 12 reçoit le plongeur 22 à coulissement et s'applique également sur le disque de réaction 30.

L'ensemble de poussée 20 est formé d'un manchon borgne 60 dont l'extrémité borgne, opposée au piston 12, est reliée par l'intermédiaire d'une tige 62 au maître cylindre. L'autre extrémité du manchon 60 comporte une surface annulaire d'appui 64 apte à coopérer avec la seconde surface d'appui 16 correspondante du piston 12. Une distance X sépare axialement ces deux surfaces sur la figure 1. Un poussoir 66, monté axialement déplaçable à l'intérieur du manchon 60, est repoussé dans une direction opposée à la flèche F1 par un ressort 68. Une surface d'appui circulaire de diamètre $D_2$ du poussoir 66 est en appui sur le disque de réaction 30.

Le disque de réaction 30 est ainsi interposé entre d'une part la surface d'appui du poussoir, et d'autre part les surfaces d'appui 14 et 28 respectivement du piston 12 et du plongeur 22.

En position de repos ou d'absence de freinage la tige de commande 18 non sollicitée par la pédale de frein est en position reculée, c'est-à-dire décalée dans un sens opposé à la flèche F1 par rapport à celle dans laquelle elle se trouve sur la figure 1.

Lorsqu'on exerce un effort sur la pédale de frein, la tige de commande 18 et le plongeur 22 se déplacent dans la direction représentée par la flèche F1, c'est-à-dire en direction de la chambre avant 6. Les moyens de commutation 24 ferment alors hermétiquement la chambre avant 6 pour la maintenir en dépression, et relient la chambre arrière 10 à l'air ambiant. L'amplificateur de force de freinage entre ainsi dans un premier état de freinage après une brève phase transitoire, désignée ici par saut de freinage initial.

Dans cet état une différence de pression règne entre la chambre arrière 10 et la chambre avant 6 et, la membrane 4 s'applique sur le support de membrane 14 transmettant ainsi au piston 12 une force de poussée correspondant à la différence de pression, orientée selon la flèche F1.

Cette force de poussée est transmise par l'intermédiaire de la première surface d'appui 14 du piston 12 et du disque de réaction 30 au poussoir 66, sous le contrôle du plongeur 22. Le poussoir 66 sous l'action de cette force de poussée comprime le ressort 68, qui exerce, en réaction, une force de poussée sur l'extrémité borgne de l'ensemble de poussée 20 entraînant ainsi son déplacement. Dans ce premier état de freinage la distance X ne s'annule pas et par conséquent le rapport d'amplification de la force de freinage est sensiblement égal au rapport de la surface circulaire d'appui du poussoir 66 sur la surface d'appui 28 du plongeur c'est-à-dire au rapport $\left(\dfrac{D_2}{D_1}\right)^2$

Au fur et à mesure que la force d'entrée sur la pédale de frein s'intensifie le poussoir 66 s'enfonce à l'intérieur du manchon 60 jusqu'à ce que la seconde surface d'appui 16 du piston 12 entre en contact avec la surface 64 correspondante de l'ensemble de poussée 20. On entre dès lors dans un second état de freinage dans lequel la force de poussée du piston 12 est également transmise à l'ensemble de poussée 20 par la surface d'appui 16 supplémentaire. Par conséquent, le rapport d'amplification de la force de freinage devient sensiblement égal à $\left(\dfrac{D_3}{D_1}\right)^2$.

Si l'utilisateur continue à intensifier la force de freinage, le piston 12 arrive en bout de course et la force d'entrée n'est plus amplifiée.

On conçoit dès lors à la lecture de la description de l'état de la technique antérieur qui vient d'être faite que pour régler la force d'entrée pour laquelle a lieu le passage entre le premier état de freinage et le second état de freinage, on doit jouer simultanément sur la constante d'élasticité du ressort 68 et sur la distance X séparant la surface d'appui 64 de l'ensemble de poussée 20 de la seconde surface d'appui du piston 12 au repos. Or, dans la pratique ce réglage s'avère long et fastidieux.

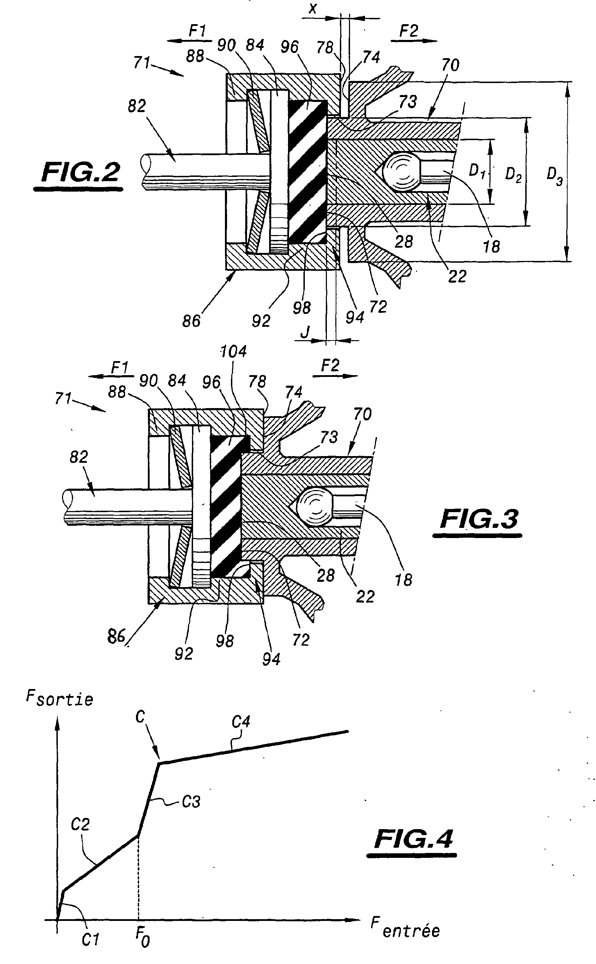

Sur la figure 2 sont représentés dans un premier état de freinage : un piston 70, un ensemble de poussée 71, et des éléments qui coopèrent avec eux conformément à l'invention. Ces éléments sont destinés à être logés dans une enceinte (non représentée sur cette figure) selon une disposition identique ou similaire à celle illustrée sur la figure 1 et précédemment commentée. Le piston 70 comporte une première et. une seconde surfaces annulaires d'appui coaxiales 72 et 74. La première surface d'appui 72, de diamètre $D_2$, est apte à s'enfoncer en coulissant à l'intérieur d'un orifice central circulaire 73 de l'une des extrémités de l'ensemble de poussée 71. La seconde surface annulaire d'appui 74, de diamètre $D_3$, en retrait de la première surface d'appui 72 dans la direction représentée par la flèche F2, est destinée à entrer en contact avec une surface correspondante 78 de l'ensemble de poussée 71.

L'ensemble de poussée 71 se compose d'une tige de réaction 82 reliée au maître cylindre, munie d'une tête plate 84 montée axialement déplaçable à l'intérieur d'un manchon 86.

L'extrémité du manchon 86, du côté de la tige de réaction 82, comporte une butée intérieure 88 destinée à recevoir en appui une rondelle Belleville 90. Cette rondelle Belleville est d'une part en appui sur cette butée 88 et d'autre part en appui sur la tête plate 84 de la tige de réaction de manière à solliciter celle-ci contre un épaulement intérieur 92 du manchon 86. L'épaulement 92 localise précisément, et de façon répétitive, la position au repos ou en l'absence de freinage, de ce manchon contre la tête plate 84 et forme ainsi une butée de fin de course pour la tête 84.

L'autre extrémité du manchon 86 comporte un rebord annulaire 94 muni de l'orifice centrale 73 et formant extérieurement la surface d'appui 78. La surface d'appui 78 est séparée axialement de la surface d'appui 74 correspondante du piston 70 d'une distance X.

Un disque de réaction 96, réalisé en matériau sensiblement incompressible et déformable, par exemple en caoutchouc, est interposé entre d'une part une surface intérieure 98 du rebord 94, et d'autre part la tête plate 84 de la tige de réaction.

La relation qui lie la force de sortie à la force d'entrée d'un amplificateur conforme à la figure 2 est représentée par la courbe **C** tracée sur le graphe de la figure 4. Cette courbe C ne présente qu'un caractère illustratif, les proportions relatives des portions qui la composent ayant été arbitrairement choisies, tout comme leurs inclinaisons, dans un souci de clarté uniquement.

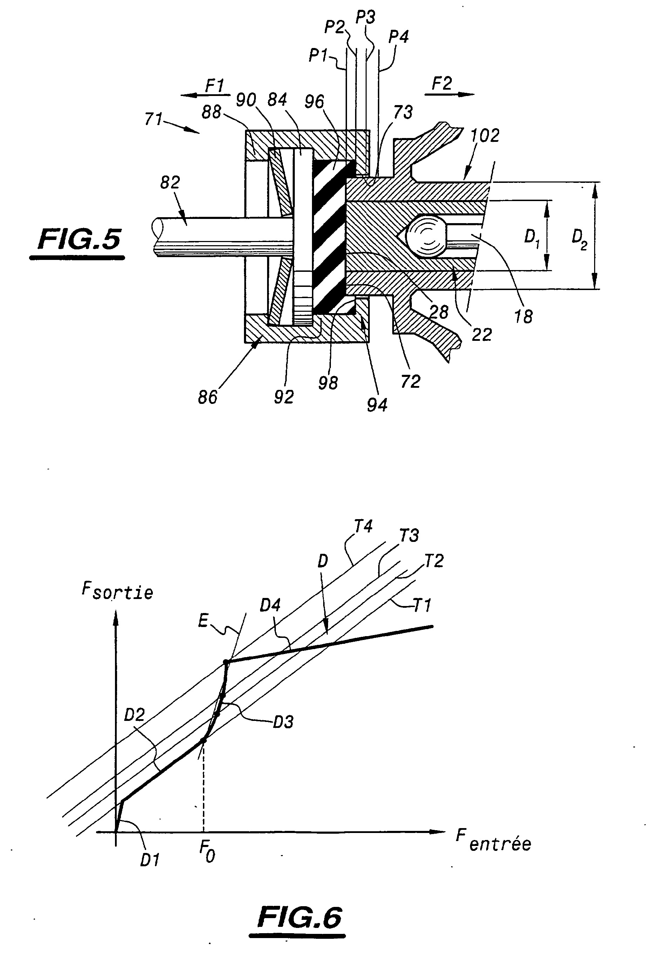

La figure 5 représente une vue analogue à celle de la figure 2 illustrant une variante de réalisation de l'invention dans laquelle le piston 70 de la figure 2 est remplacé par un piston 102 ne comportant pas de seconde surface d'appui équivalente à la surface d'appui 74 du piston 70 destinée à venir en butée sur l'ensemble de poussée 71.

En variante la rondelle Belleville 90 utilisée dans les modes de réalisation de là figure 2 et de la figure 5 peut être remplacée par tous moyens élastiques permettant d'exercer une force de réaction sur la tête plate 84 de la tige de réaction 82 dans le sens de la flèche F2.

Le fonctionnement de l'amplificateur de force de freinage à double rapport d'amplification conforme à l'invention va maintenant être décrit à l'aide des figures 2 à 6.

On se réfère tout d'abord aux figures 2 à 4 décrivant l'invention selon un premier mode de réalisation.

En position de repos ou d'absence de freinage, la première surface d'appui 72 du piston 70 est en contact avec le disque de réaction 96 mais n'exerce aucune force de poussée sur celui-ci. Un jeu J, représenté en trait mixte sur la figure 2, existe, de manière connue, entre la surface d'appui 28 du plongeur et le disque de réaction 96. De façon similaire à la figure 1 lorsqu'on exerce une force d'entrée sur la pédale de frein il se produit de manière connue un saut de freinage initial lié à l'existence du jeu J. Ce saut de freinage initial est représenté par la portion C1 de la courbe C de la figure 4.

Si on intensifie la force de freinage, le plongeur 22 poursuit sa course jusqu'au contact avec le disque de réaction 96. L'amplificateur est ainsi dans un premier état de freinage dans lequel la première surface d'appui 72 du piston 70 et la surface 28 du plongeur 22 exercent une pression sur le disque de réaction 96.

Cette pression s'exerce par l'intermédiaire du disque de réaction 96 sur la surface intérieure 98 du manchon et sur la tête plate 84 de la tige de réaction 82.

La pression sur la surface intérieure 98 exerce une force de poussée dans la direction de la flèche F2 sur le manchon 86 qui se déplace, lorsque celle-ci dépasse un seuil, à l'encontre de la rondelle Belleville 90 dans la direction F2. Ce déplacement du manchon crée à l'intérieur du manchon et autour de l'extrémité du piston 70 une cavité annulaire 104 (Fig. 3), remplie par la matière déplacée par les déformations du disque de réaction 96. On conçoit dès lors qu'au fur et à mesure que la force d'entrée augmente le manchon 86 se déplace vers le piston 70 et que la distance X diminue.

La pression sur la tête plate 84 exerce quant à elle une force de poussée dans la direction de la flèche F1 qui est transmise en sortie de l'amplificateur de force de freinage par la tige de réaction 82.

Sur cette partie du déplacement du manchon 86 la quantité d'énergie nécessaire pour déformer le disque de réaction 96 est négligeable et le rapport d'amplification de la force d'entrée est considéré comme constant. Le rapport d'amplification dans ce premier état de freinage est en pratique sensiblement égal au rapport

$$\left(\frac{D_2}{D_1}\right)^2.$$ On se déplace sur la portion C2 de la courbe C de la figure 4.

En augmentant encore la force d'entrée on atteint une force d'entrée, notée F0 sur le graphe de la figure 4, pour laquelle la surface d'appui 74 du piston 70 entre en contact avec la surface d'appui 78 correspondante de l'ensemble de poussée 71 comme illustré sur la figure 3. On passe alors dans un second état de freinage, représenté par la portion C3 de la courbe C de la figure 4, dans lequel le rapport d'amplification est sensiblement égal à $\left(\frac{D_3}{D_1}\right)^2$

Le fonctionnement de l'amplificateur dans ce second état de freinage est similaire à celui décrit en regard de la figure 1 lorsque la seconde surface d'appui 32 de la figure 1 est en contact avec la surface d'appui 64 correspondante de l'ensemble de poussée 18 et en conséquence ne sera pas décrit plus en détail. De même le fonctionnement de l'amplificateur lorsque le piston 70 arrive en bout de course, représenté par la portion C4 de la courbe C de la figure 4, est similaire à celui décrit en regard de la figure 1 dans la même situation et ne sera également pas décrit plus en détail.

Les différentes phases du fonctionnement de la variante de l'amplificateur de force de freinage représentée dans la figure 5 sont illustrées par l'évolution de la force de sortie en fonction de la force d'entrée représentée par la courbe D de la figure 6. De façon similaire au fonctionnement de l'amplificateur de la figure 2, lorsqu'on exerce une force d'entrée sur la pédale de frein, il se produit un saut de freinage initial, représenté par la portion D1 de la courbe D.

Ensuite, lorsque l'on intensifie la force d'entrée, la surface intérieure 98 du manchon passe successivement en différentes positions, notées P1, P2, P3 et P4 sur la figure 5, P1 et P4 étant les extrémités de la course du manchon. Chaque position est associée sur la figure 6 à une droite de travail correspondante, respectivement T1, T2, T3 et T4. Le décalage de la droite lors des passages successifs dans les positions P1 à P4 résulte notamment de l'accroissement de l'énergie nécessaire pour déformer le disque de réaction 96 au fur et à mesure que la force d'entrée s'intensifie.

Ainsi en début de freinage et de manière analogue au mode de réalisation de la figure 2, l'énergie nécessaire pour déformer le disque de réaction 96 est faible et le décalage de la droite de travail peut être négligé. On se déplace alors sur la portion D2 de la courbe D assimilée à une droite. Ceci correspond à un premier état de freinage dans lequel le rapport d'amplification est sensiblement égal à $\left(\dfrac{D_2}{D_1}\right)^2$.

Ensuite pour un seuil de la force d'entrée, noté F0, le décalage de la droite de travail ne peut plus être négligé et le rapport d'amplification augmente de façon non linéaire comme représenté par la portion D3 de la courbe D. On entre dès lors dans un second état de freinage. Dans ce mode de réalisation, la portion D3 peut toutefois, en première approximation, être également assimilée à une droite E (Fig. 6) présentant un second rapport d'amplification supérieur à celui de la portion D2.

Enfin, ce second état de freinage est suivi d'une phase finale sans amplification, représentée par la portion D4 de cette même figure 6, et descriptible de manière analogue à celle des figures 1 et 2.

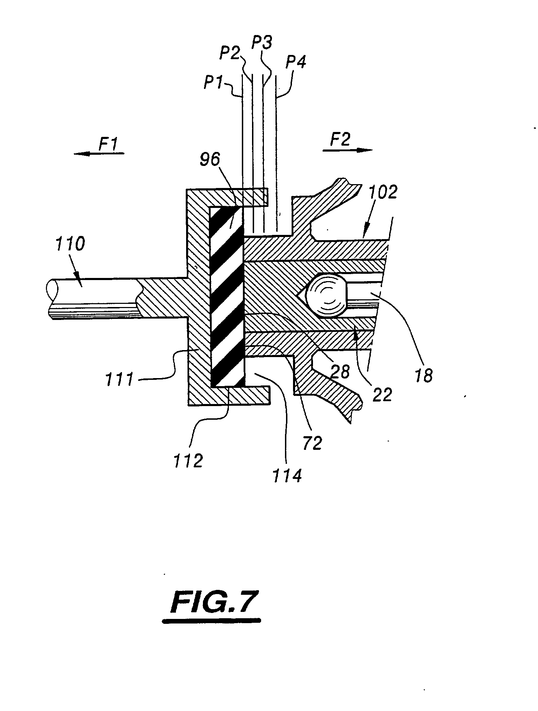

Dans un mode de réalisation très simplifié de l'invention illustré à la figure 7, l'ensemble de poussée 71 de la figure 5 est remplacé par une tige de réaction 110 munie à son extrémité d'une tête 111 pourvue d'un logement circulaire 112 apte à recevoir l'extrémité du piston 102. Le diamètre intérieur de ce logement 112 est supérieur au diamètre $D_2$ du piston 102 de manière à ménager un cavité d'absorption 114 des déformations du disque de réaction 96. Le disque de réaction 96 est disposé au fond du logement 112 et en contact avec les surfaces d'appui 28,72 respectivement du plongeur 22 et du piston 102.

Le fonctionnement de l'amplificateur de la figure 7 reste similaire à celui de la figure 5. Le décalage de la droite de travail peut, en début de freinage, être négligé et on se déplace alors sur la portion D2 de la courbe D de la figure 6. Ensuite, si on intensifie la force d'entrée, le décalage de la droite de travail n'est plus négligeable, et on se déplace sur la portion D3 de la courbe D.

Dans les amplificateurs de force de freinage à double rapport d'amplification conforme à l'invention le disque de réaction 96 absorbe une partie de l'énergie de la force d'entrée pour se déformer. Par conséquent, on conçoit à la lecture de la description qui vient d'être faite que pour décaler le seuil F0 de la force d'entrée au-delà duquel un amplificateur de force de freinage conforme à l'invention passe d'un premier état de freinage à un second état de freinage, il suffit de remplacer le disque de réaction par un autre dont la raideur est différente et plus appropriée. Il n'est donc pas nécessaire pour ajuster le seuil F0 de remplacer la rondelle Belleville par une autre rondelle Belleville ayant une constante d'élasticité différente ou d'ajuster la distance X lorsque l'amplificateur de force de freinage est au repos.

La description ci-dessus n'est pas restrictive, et l'invention est aisément applicable par l'homme de l'art à différentes variantes, sans que celles-ci ne soient expressément citées ici.

Par exemple, l'amplificateur peut être du type tandem triple à dépression ou pneumatique, le dispositif de réaction simple ou double, les rondelles Belleville remplacées par des pièces en matière résiliente, par exemple du caoutchouc.

Par ailleurs, la description ci-dessus identifie clairement deux modes de réalisation, avec ou sans seconde surface d'appui 74 sur le piston 70. Le dispositif opérationnel peut fonctionner avec une seconde surface d'appui sur le piston, tout en présentant dans la phase qui précède la butée toutes les caractéristiques du dispositif sans seconde face d'appui décrit plus avant.

**Revendications**

1. Amplificateur de force de freinage à double rapport d'amplification comportant :

   - un piston (70, 102) actionné par une pression différentielle entre deux chambres (6, 10);
   - un plongeur (22), monté axialement déplaçable dans ce piston entre des positions commandant l'évolution de cette pression différentielle par l'intermédiaire de moyens de commutation (24), sous la commande d'une pédale de frein ;
   - un ensemble de poussée (71) comprenant une tige de réaction (82; 110) reliée au maître cylindre des freins correspondant, et montée axialement déplaçable sous la commande du plongeur entre un premier état de freinage correspondant à un premier rapport d'amplification de la force de freinage, et un second état de freinage correspondant à un second rapport d'amplification de la force de freinage, et un disque de réaction (96) déformable interposé entre le piston et le plongeur d'une part, et la tige de réaction d'autre part,

   **caractérisé en ce que** l'ensemble de poussée comporte des moyens (98, 104 ; 114) d'absorption des déformations du disque de réaction, lesdites déformations contribuant à déterminer la force de freinage pour laquelle a lieu le passage entre le premier et le second états de freinage, et **en ce que** la tige de réaction (82) comporte à son extrémité une tête (84) montée axialement déplaçable à l'intérieur d'un manchon (86) pourvu d'un rebord (94) formant d'une part un orifice (73) dans lequel une extrémité du piston (70, 102) coulisse, et d'autre part une surface d'appui (98), le disque de réaction (96) étant logé à l'intérieur du manchon en appui d'un côté sur ladite tête (84) et d'un autre côté sur ladite surface d'appui (98) du rebord, ladite surface d'appui (98) du rebord coopérant avec ladite extrémité du piston lors du déplacement de celui-ci pour former lesdits moyens d'absorption des déformations du disque de réaction.

**2.** Amplificateur selon la revendication 1, **caractérisé en ce que** lesdites déformations sont fonction de la raideur du disque de réaction (96).

**3.** Amplificateur selon la revendication 1 ou 2, **caractérisé en ce que** le piston (70) comporte une surface d'appui (74) destinée à venir en contact avec une surface d'appui (78) correspondante de l'ensemble de poussée, l'aire de contact entre ces deux surfaces déterminant sensiblement le second rapport d'amplification, et la distance (X) entre ces deux surfaces, au repos, contribuant à déterminer la force de freinage pour laquelle a lieu le passage entre le premier et le second états de freinage.

**4.** Amplificateur selon la revendication 3, **caractérisé en ce que** lesdites surfaces d'appui (74, 78) du piston et de l'ensemble de poussée (71) sont annulaires et coaxiales entre elles.

**5.** Amplificateur selon l'une quelconque des revendications précédentes, **caractérisé en ce que** le disque de réaction (96) est disposé dans un logement (112) formé dans une tête (84) à l'extrémité de la tige de réaction (110), ledit logement ménageant une cavité (114) formant lesdits moyens d'absorption des déformations.

**6.** Amplificateur selon la revendication 5, **caractérisé en ce que** le logement (112) est adapté pour recevoir une extrémité du piston (102) et présent une dimension supérieure à celle de ladite extrémité du piston (102) de manière à ménager la cavité (114) d'absorption des déformations du disque de réaction (96).

**7.** Amplificateur selon l'une des revendications 1 à 4, **caractérisé en ce que** l'orifice (73) formé par le rebord (94) du manchon (86) est circulaire et **en ce que** l'extrémité du piston (70, 102) apte à coulisser dans celui-ci est cylindrique.

**8.** Amplificateur selon l'une des revendication 1 à 4 ou 8, **caractérisé en ce que** des moyens élastiques (90) sont montés à l'intérieur du manchon (86) en appui d'une part sur une face de la tête (84) de la tige de réaction (82) opposée au disque de réaction (96) et d'autre part sur une butée (88) solidaire du manchon pour exercer sur ce dernier une force de rappel.

**9.** Amplificateur selon la revendication 8, **caractérisé en ce que** les moyens élastiques (90) sont formés d'une rondelle Belleville.

**10.** Amplificateur selon l'une des revendications 1 à 4 ou 7 à 9, **caractérisé en ce que** le manchon (86) comporte un épaulement (92) adapté pour servir de butée de fin de course à la tête (84) de la tige de réaction (82) en l'absence de freinage.

**11.** Amplificateur selon l'une quelconque des revendications précédentes, **caractérisé en ce que** le disque de réaction (96) est pratiquement incompressible.

**12.** Amplifcateur selon l'une quelconque des revendications précédentes, **caractérisé en ce que** le premier rapport d'amplification est pratiquement constant.

**13.** Amplificateur selon l'une quelconque des revendications précédentes, **caractérisé en ce que** le second rapport d'amplification est pratiquement constant.

**Claims**

**1.** Braking force booster having a double amplification ratio comprising:

- a piston (70, 102) which is actuated by differential pressure between two chambers (6, 10);
- a plunger (22) which is arranged so as to be axially movable in the piston between positions which bring about the development of the differential pressure by way of commutation means (24), under the control of a brake pedal;
- a thrust assembly (71) which comprises a reaction rod (82; 110) which is connected to the corresponding master cylinder of the brakes and which is arranged so as to be axially movable under the control of the plunger between a first braking state which corresponds to a first ratio for amplifying the braking force and a second braking state which corresponds to a second ratio for amplifying the braking force, and a deformable reaction disc (96) which is interposed between the piston and the plunger, at one side, and the reaction rod, at the other side,

**characterised in that** the thrust assembly comprises means (98, 104; 114) for absorbing the deformations of the reaction disc, the deformations contributing to determining the braking force for which the movement occurs between the first braking state and the second braking state, and **in that** the reaction rod (82) comprises, at the end thereof, a head (84) which is arranged so as to be axially movable inside a sleeve (86) which is provided with a shoulder (94) which forms, at one side, a hole (73), in which one end of the piston (70, 102) slides, and, at the other side, an abutment surface (98), the reaction disc (96) being received inside the sleeve in abutment, at one side, with the head (84) and, at another side, with the abutment surface (98) of the shoulder, the abutment surface (98) of the shoulder cooperating with the end of the piston during the movement thereof in order to form the means for absorbing the deformations of the reaction disc.

2. Booster according to claim 1, **characterised in that** the deformations are in accordance with the stiffness of the reaction disc (96).

3. Booster according to claim 1 or claim 2, **characterised in that** the piston (70) comprises an abutment surface (74) which is intended to come into contact with a corresponding abutment surface (78) of the thrust assembly, the contact surface-area between those two surfaces substantially determining the second amplification ratio, and the distance (X) between those two surfaces, in the rest state, contributing to determining the braking force for which the movement occurs between the first braking state and the second braking state.

4. Booster according to claim 3, **characterised in that** the abutment surfaces (74, 78) of the piston and the thrust assembly (71) are annular and mutually co-axial.

5. Booster according to any one of the preceding claims, **characterised in that** the reaction disc (96) is arranged in a housing (112) which is formed in a head (84) at the end of the reaction rod (110), the housing providing a space (114) which forms the means for absorbing the deformations.

6. Booster according to claim 5, **characterised in that** the housing (112) is adapted to receive one end of the piston (102) and has dimensions greater than those of the end of the piston (102) so as to provide the space (114) for absorbing the deformations of the reaction disc (96).

7. Booster according to any one of claims 1 to 4, **characterised in that** the hole (73) which is formed by the shoulder (94) of the sleeve (86) is circular and **in that** the end of the piston (70, 102) which is suitable for sliding therein is cylindrical.

8. Booster according to any one of claims 1 to 4 or 8, **characterised in that** resilient means (90) are arranged inside the sleeve (86) in abutment, at one side, with a face of the head (84) of the reaction rod (82) opposite the reaction disc (96) and, at the other side, with a stop (88) which is fixedly joined to the sleeve in order to apply a restoring force thereto.

9. Booster according to claim 8, **characterised in that** the resilient means (90) are formed by a Belleville washer.

10. Booster according to any one of claims 1 to 4 or 7 to 9, **characterised in that** the sleeve (86) comprises a shoulder (92) which is suitable for acting as a travel limit stop at the head (84) of the reaction rod (82) in the absence of braking.

11. Booster according to any one of the preceding claims, **characterised in that** the reaction disc (96) is practically incompressible.

12. Booster according to any one of the preceding claims, **characterised in that** the first amplification ratio is practically constant.

13. Booster according to any one of the preceding claims, **characterised in that** the second amplification ratio is practically constant.

**Patentansprüche**

1. Bremskraftverstärker mit zweifachem Verstärkungsverhältnis, der umfasst:

- einen Kolben (70, 102), der durch einen Differenzdruck zwischen zwei Kammern (6, 10) betätigt wird;
- einen Tauchkolben (22), der in diesem Kolben so montiert ist, dass er zwischen Positionen, die den Aufbau dieses Differenzdrucks steuern, über Umschaltmittel (24) unter der Steuerung eines Bremspedals axial verlagerbar ist;
- eine Schubanordnung (71), die einen mit dem Hauptbremszylinder verbundenen Gegenkraftstift (82; 110), der so montiert ist, dass er unter der Steuerung des Tauchkolbens zwischen einem ersten Bremszustand, der einem ersten Bremskraftverstärkungsverhältnis entspricht, und einem zweiten Bremszustand, der einem zweiten Bremskraftverstärkungsverhältnis entspricht, axial verlagerbar ist, und eine verformbare Gegenkraftscheibe (96), die zwischen den Kolben und den Tauchkolben einerseits und den Gegenkraftstift andererseits eingefügt ist, umfasst,

**dadurch gekennzeichnet, dass** die Schubanordnung Mittel (98, 104; 114) für die Absorption von Verformungen der Gegenkraftscheibe umfasst, wobei die Verformungen dazu beitragen, die Bremskraft festzulegen, bei der der Übergang zwischen dem ersten und dem zweiten Bremszustand erfolgt, und dass der Gegenkraftstift (82) an seinem Ende einen Kopf (84) aufweist, der in einer Muffe (86), die mit einem Randanschlag (94) versehen ist, der einerseits eine Öffnung (73), in der ein Ende des Kolbens (70, 102) gleitet, und andererseits eine Abstützfläche (98) bildet, axial verlagerbar montiert ist, wobei die Gegenkraftscheibe (96) in die Muffe in der Weise eingesetzt ist, dass sie sich an einer Seite des Kopfes (84) und an einer anderen Seite der Abstützfläche (98) des Randanschlags abstützt, wobei die Abstützfläche (98) des Randanschlags mit dem Ende des Kolbens zusammenwirkt, wenn sich dieser verlagert, um die Mittel zur Absorption der Verformungen der Gegenkraftscheibe zu bilden.

2. Verstärker nach Anspruch 1, **dadurch gekennzeichnet, dass** die Verformungen vom Radius der Gegenkraftscheibe (96) abhängen.

3. Verstärker nach Anspruch 1 oder 2, **dadurch gekennzeichnet, dass** der Kolben (70) eine Abstützfläche (74) aufweist, die dazu vorgesehen ist, mit einer entsprechenden Abstützfläche (78) der Schubanordnung in Kontakt zu gelangen, wobei die Größe der Fläche, auf der diesen beiden Flächen in Kontakt sind, im Wesentlichen das zweite Verstärkungsverhältnis bestimmt und wobei der Abstand (X) zwischen diesen beiden Flächen im Ruhezustand dazu beiträgt, die Bremskraft zu bestimmen, bei der der Übergang zwischen dem ersten und dem zweiten Bremszustand erfolgt.

4. Verstärker nach Anspruch 3, **dadurch gekennzeichnet, dass** die Abstützflächen (74, 78) des Kolbens und der Schubanordnung (71) ringförmig und zueinander koaxial sind.

5. Verstärker nach einem der vorhergehenden Ansprüche, **dadurch gekennzeichnet, dass** die Gegenkraftscheibe (96) in einem Aufnahmesitz (112) angeordnet ist, der in einem Kopf (84) am Ende des Gegenkraftstifts (110) ausgebildet ist, wobei der Aufnahmesitz einen Hohlraum (114) bildet, der die Mittel zur Absorption der Verformungen bildet.

6. Verstärker nach Anspruch 5, **dadurch gekennzeichnet, dass** der Aufnahmesitz (112) dazu ausgelegt ist, ein Ende des Kolbens (102) aufzunehmen, und eine Abmessung besitzt, die größer als jene des Endes des Kolbens (102) ist, derart, dass der Hohlraum (114) für die Absorption der Verformungen der Gegenkraftscheibe (96) gebildet wird.

7. Verstärker nach einem der Ansprüche 1 bis 4, **dadurch gekennzeichnet, dass** die durch den Randanschlag (94) der Muffe (86) gebildete Öffnung (73) kreisförmig ist und dass das Ende des Kolbens (70, 102), das darin gleiten kann, zylindrisch ist.

8. Verstärker nach einem der Ansprüche 1 bis 4 oder 8, **dadurch gekennzeichnet, dass** in der Muffe (86) elastische Mittel (90) montiert sind, die sich einerseits an einer Seite des Kopfes (84) des Gegenkraftstifts (82) gegenüber der Gegenkraftscheibe (96) und andererseits an einem Anschlag (88), der mit der Muffe fest verbunden ist, abstützen, um auf diese Letztere eine Rückstellkraft auszuüben.

9. Verstärker nach Anspruch 8, **dadurch gekennzeichnet, dass** die elastischen Mittel (90) aus einer Tellerfeder gebildet sind.

10. Verstärker nach einem der Ansprüche 1 bis 4 oder 7 bis 9, **dadurch gekennzeichnet, dass** die Muffe (86) eine Schulter (92) umfasst, die dazu ausgelegt ist, bei Abwesenheit einer Bremsung als Wegendanschlag des Kopfes (84) des Gegenkraftstifts (82) zu dienen.

11. Verstärker nach einem der vorhergehenden Ansprüche, **dadurch gekennzeichnet, dass** die Gegenkraftscheibe (96) im Wesentlichen nicht komprimierbar ist.

12. Verstärker nach einem der vorhergehenden Ansprüche, **dadurch gekennzeichnet, dass** das erste Verstärkungsverhältnis im Wesentlichen konstant ist.

13. Verstärker nach einem der vorhergehenden Ansprüche, **dadurch gekennzeichnet, dass** das zweite Verstärkungsverhältnis im Wesentlichen konstant ist.

**FIG.1**

**FIG.2**

**FIG.3**

**FIG.4**

**_FIG.5_**

**_FIG.6_**

**FIG.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5943937 A